(19) Europäisches Patentamt

European Patent Office

Office européen des brevets

(11) EP 4 765 806 A1

## (12) EUROPEAN PATENT APPLICATION

(43) Date of publication:
**24.06.2026 Bulletin 2026/26**

(21) Application number: **24307136.2**

(22) Date of filing: **17.12.2024**

(51) International Patent Classification (IPC):
**H04N 19/117** (2014.01)     **H04N 19/172** (2014.01)
**H04N 19/186** (2014.01)     **H04N 19/59** (2014.01)
**H04N 19/85** (2014.01)

(52) Cooperative Patent Classification (CPC):
**H04N 19/117; H04N 19/172; H04N 19/186;
H04N 19/59; H04N 19/85**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LE MEUR, Olivier**
  **35160 TALENSAC (FR)**

• **LAMBERT, Anne**
  **35250 SAINT-AUBIN-D'AUBIGNE (FR)**
• **SCHNITZLER, Francois**
  **56890 SAINT AVE (FR)**
• **DAMODARAN, Bharath Bhushan**
  **56000 VANNES (FR)**
• **CHEN, Ya**
  **35700 RENNES (FR)**
• **GALPIN, Franck**
  **35235 THORIGNE-FOUILLARD (FR)**

(74) Representative: **Interdigital**
**Immeuble ZEN 2**
**845 A, avenue des Champs Blancs**
**35510 Cesson-Sévigné (FR)**

## (54) NEURAL NETWORK BASED ENCODING AND DECODING METHODS

(57)      A method, e.g., a decoding method, is disclosed. A set of latent variables representative of a current picture, parameters of a set of at least one first neural network, and at least one parameter of a downsampling chroma network are first obtained. The current picture is reconstructed based on the set of latent variables, the parameters of the set of at least one first neural network and the parameters of the downsampling chroma network.

500

502

obtaining a set of latent variables representative of a current picture, parameters of a first neural network, and at least one parameter of a downsampling chroma network

504

reconstructing the current picture based on the set of latent variables, the parameters of the first neural network and The at least one paramater of the downsampling chroma network

**FIG. 5**

EP 4 765 806 A1

## Description

### BACKGROUND

The present application is related to methods and apparatuses for picture encoding and decoding using neural networks.

### BRIEF SUMMARY

Briefly stated, in one embodiment, a method (e.g., a decoding method) is disclosed that comprises obtaining a set of latent variables representative of a current picture, parameters of a set of at least one first neural network, and at least one parameter of a downsampling chroma network. The current picture is reconstructed based on the set of latent variables, the parameters of the set of at least one first neural network and the parameters of the downsampling chroma network. Another method (e.g., an encoding method) is disclosed that comprises training a neural network representation of a current picture to derive a set of latent variables representative of the current picture, parameters of a set of at least one first neural network, and at least one parameter of a downsampling chroma network. The set of latent variables, the parameters of the set of at least one first neural network and at least one parameter of the downsampling chroma network are then encoded. Corresponding apparatus (e.g., encoding and decoding apparatuses) are also disclosed.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 illustrates an example of a neural network that can be used for implicit neural representation (INR);
FIG. 3 illustrates an example of a method to encode a signal using an INR;
FIG. 4 illustrates an example of a neural architecture that is an INR variant, called in the following Hybrid INR;
FIG. 5 is a block diagram illustrating an example decoding method according to one or more embodiments of the present disclosure ;
FIG. 6 is a block diagram illustrating an example encoding method according to one or more embodiments of the present disclosure;
FIG. 7 is a block diagram illustrating an example encoding method according to one or more embodiments of the present disclosure;
FIGs 8 and 9 are block diagrams illustrating examples of neural network for chroma downsampling according to one or more embodiments of the present disclosure;
FIG. 10 illustrate two examples of chroma phasing;
FIG. 11 is a block diagram illustrating an example decoding method according to one or more embodiments of the present disclosure;
FIG. 12 is a block diagram illustrating an example decoding method according to one or more embodiments of the present disclosure; and
FIG. 13 is a block diagram illustrating an example decoding method according to one or more embodiments of the present disclosure.

### DETAILED DESCRIPTION

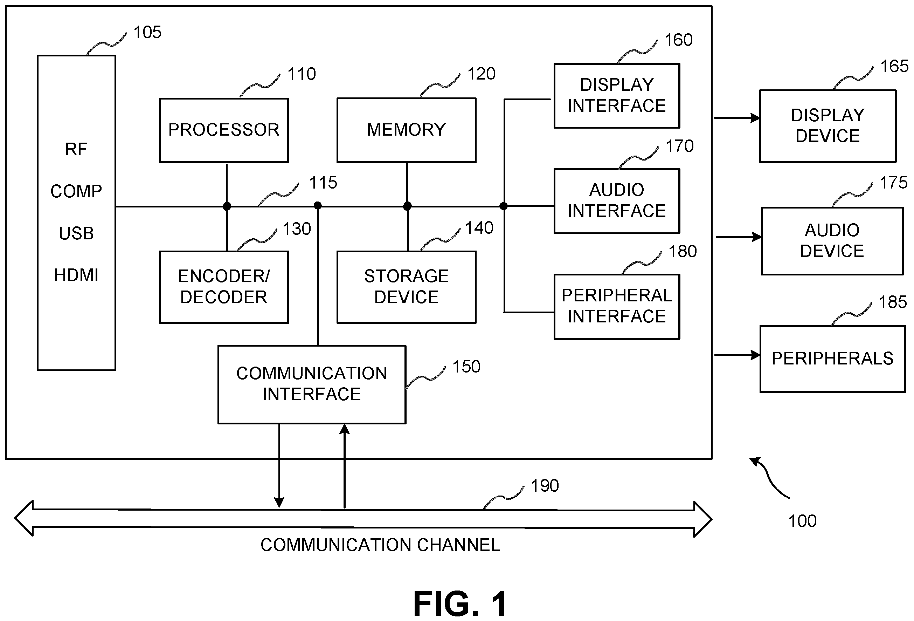

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

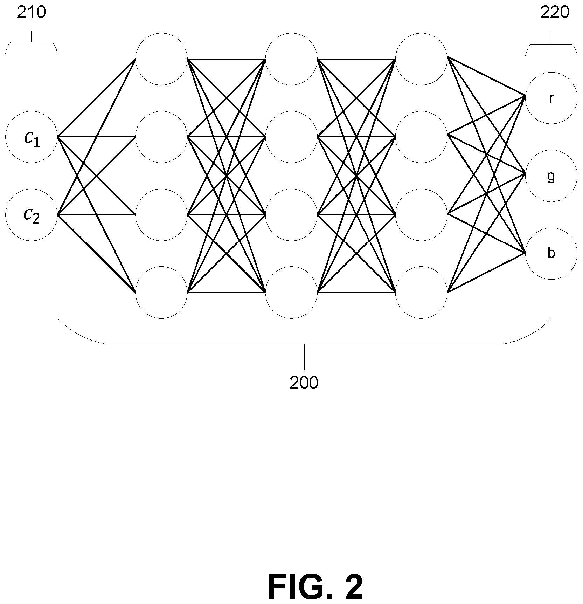

**FIG. 2** illustrates an example of a neural network that can be used for implicit neural representation (INR). Such a neural network used for INR can be referred to as an INR network. The INR network is also referred as Coordinates Neural Representation. Indeed, INRs are trained to map a (e.g., each) point in a given domain to the corresponding value of a signal at that point. For example, INRs for images learn to map the 2D coordinates of pixels to their corresponding RGB/YUV values. The INR network allows to obtain a compact representation of an input signal, an image for example. The INR network models the input signal by an overfitted Multi Layer Perceptron (MLP), performing, in the case of an image for example, the mapping from pixel coordinates to its RGB values.

The INR parameterizes a signal as a function 200, which takes coordinates 210 as input and outputs values 220 of a signal at these coordinates. INR has recently been applied to image, videos or 3D objects among other applications. In the image case, the inputs 210 can be pixel coordinates $(c_1, c_2)$ and the INR may output 220 the color values $(r, g, b)$ or $(y, u, v)$ of the input pixel. The input coordinates 210 may be modified by a transformation before being used as input for the neural network. This transformation can be a Fourier mapping, coordinate transformation, normalization etc.

The INR can be used to reconstruct a signal by computing the signal values for (e.g., every) necessary coordinate inputs. It can be used to upsample a signal by generating output for input coordinates corresponding to the upsampled pixels, for example the mean of the coordinates between two consecutive pixels for upsampling by a factor of 2.

An INR network 200 is typically a neural network, composed of multiple neural layers, such as fully connected layers. For example, in FIG. 2, the network has four layers. Intermediate outputs are represented by circles. Each neural layer can be described as a function that first multiplies the input by a tensor, adds a vector called the bias and then applies a nonlinear function on the resulting values. The shape (and other characteristics) of the tensor and the type of non-linear functions are called the architecture of the network. The values of the tensor and the bias are denoted by the term "weights". The weights and, if applicable, the parameters of the non-linear functions, are called the parameters $\theta$ of the network. The architecture and the parameters define a "model". We will use $f_\theta$ to denote an INR function parameterized by $\theta$.

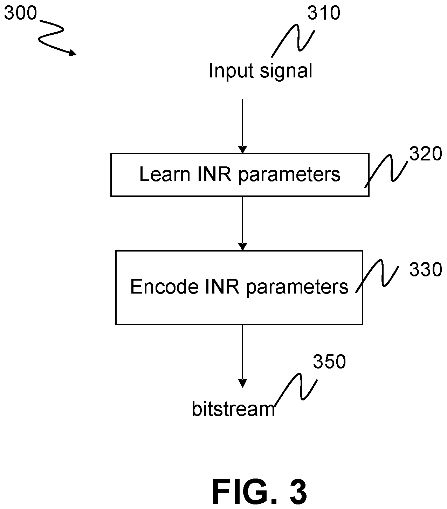

**FIG. 3** illustrates an example of a method 300 to encode a signal 310 using an INR. This is done by optimizing 320 the parameters $\theta$ (or a subset of them) of the INR network to reconstruct the signal and optionally encoding 330 them to create the output bitstream 350. For an image x of size $(M \times N)$, the parameters $\theta$ can for example be optimized by minimizing the following loss function:

$$\text{Loss} = \text{D}(x, f_\theta) + \lambda R(\theta)$$

$$D_{MSE} = \frac{1}{MN} \sum_{c_1, c_2} \left( x(c_1, c_2) - f_\theta(c_1, c_2) \right)^2$$

where D is a distortion which quantifies the difference between the reconstructed image by $f_\theta$ to the original image x, R is the bitrate of the encoded parameters and $\lambda$ a trade-off parameter between D and R. D could be any differentiable distortion measure, such as mean squared error $D_{MSE}$ as in the second equation. M and N are the width and height of the original image. Other metrics such as LPIPS (learned perceptual image patch similarity) can also be used in this case. The optimization of the parameters $\theta$ is typically performed by a machine learning approach such as a batch gradient descent method.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs $(c_1, c_2)$ for all $c_1 \in 0,1, ...,255$ and $c_2 \in 0,1, ...,255$. Other choices are possible, for example to upsample, downsample or extend the original image.

The bitstream encoding a signal may thus be created by encoding the parameters of the neural network. This can be done by a neural compression codec such as Neural Network Coding (NNC)/ ISO/IEC 15938-17 or MPEG-7 part 17 or by quantizing the parameters and/or pruning some neurons from the network.

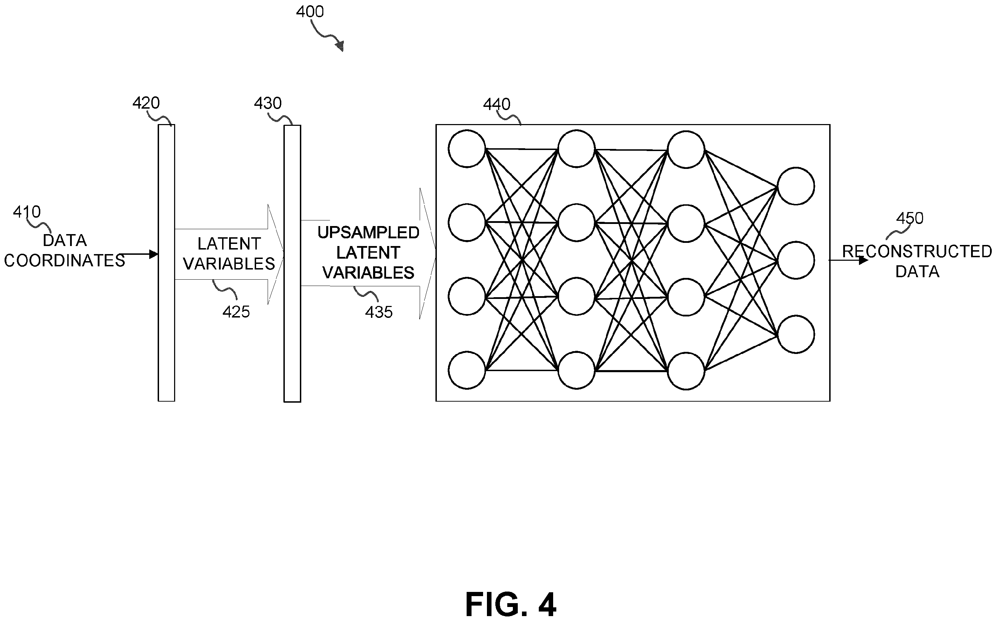

**FIG. 4** illustrates an example of a neural architecture that is an INR variant, called in the following Hybrid INR. Hybrid INRs are conditioned on a latent vector, typically learned end-to-end as part of the model. This hybrid INR network may be applied by INR-based encoder and INR-based decoder. In the example of FIG. 4, during the encoding of input data (that is, the training of the network 400), the input data's coordinates 410 are first mapped, by a mapping unit 420, into respective latent variables 425. The mapping can be implemented by a lookup table or a hash function, for example. The mapping may also involve any transformation, such as a Fourier transformation, a coordinate transformation, a normalization transformation, or a combination thereof. The latent variables 425 may optionally be upsampled, by an up-sampling unit 430, resulting in upsampled latent variables 435. The up-sampling is applied in a case where the latent variables are represented at different resolutions so that the up-sampled latent variables are at one and the same resolution. The upsampled latent variables 435 may be used as an input to an INR network 440, trained to produce the reconstructed data 450. In a hybrid-INR network 400 the latent variables 425 are trained together with the parameters $\theta$ of the INR network 440, resulting in optimal network parameters and optimal latent variables. Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR network 400, the learned latent variables 425 and network parameters may be quantized and encoded (e.g., entropy coded) into the bitstream. Thus, during inference, the latent variable 425 and the network parameters of the trained INR network 440 are first decoded from the bitstream and dequantized. Then, the decoded and dequantized latent variables may be upsampled 430. To reconstruct the data 450, the up-sampled latent variables are fed into the trained INR network 440 using the decoded and dequantized network parameters of the INR network.

In an example, due to their large bit representation, efficient coding of the latent variables may use the estimation of their distributions. To that end, the distributions of respective latent variables may be learned using a probability prediction (PP) network, i.e., a network trained to produce parameters of distributions of respective latent variables. Based on these learned distribution parameters, the latent variables 425 may be entropy coded into the bitstream. The PP network is defined by PP network parameters, denoted by $\psi$, determined during the training of the PP network. These PP network parameters may be entropy coded into the bitstream. In an example, while entropy coding of the latent variables relies on their learned respective distributions the entropy coding of the PP network parameters $\psi$ and the INR network parameters $\theta$ rely on respective non-learned distributions.

In another example, for some (e.g., all) of the latent variables respective non-learned distributions can be used for entropy coding. These non-learned distributions may be fixed distributions or may be distributions that were learned with respect to other latent variables (e.g., latent variables representing data from previous frames).

An example of a hybrid-INR architecture, called COOL-CHIC, for image coding is described in Ladune T, Philippe P, Henry F, et al. (2023) Cool-chic: Coordinate-based low complexity hierarchical image codec. Proceedings of the International Conference on Computer Vision (ICCV), hereinafter "Ladune". In Ladune as in many hybrid INR models, the latent variables are arranged in hierarchical layers (or channels) ranging from a low-resolution representation (that provides for compact representation of smooth image regions) to a high-resolution representation (that captures the fine details of the image).

The training of a hybrid INR network requires the original image which is usually defined with three channels (e.g., RGB, YUV, YCbCr, etc) having the same resolution, i.e. the same number of samples per channel. In other examples, the original image may also be a frame with a YUV 4:2:0 format, in which case the luminance is stored at full resolution whereas the chroma components, U and V, are stored at half resolution (in both vertical and horizontal dimensions), meaning that there are four times as many Y values (i.e., samples) stored than for either of the chroma channels.

During training of the hybrid INR, the objective is thus to find the latent variables $\hat{y}$ and the INR network parameters $\theta$ that minimize the coding cost, as follows:

$$\min_{\hat{y},\theta} Cost = \min_{\hat{y},\theta} \left( D\left(x, f_{\boldsymbol{\theta}}(\hat{z})\right) + \lambda \times R(\hat{y}, \theta \,) \right) \qquad (1)$$

where $\hat{y}$ denotes the quantized latent variables and $\hat{z}$ denotes their up-sampled version; where $f_{\theta}$ denotes the INR network and $\theta$ denotes the INR network parameters; where $D$ denotes a distortion metric measuring the distance between the image $x$ and its reconstructed version $\hat{x}$, as produced by the INR network $f_{\theta}$ from the up-sampled latent variables $\hat{z}$, that is, $\hat{x} = f_{\theta}(\hat{z})$; and where $R$ denotes the rate (in bits per pixel) measuring the number of bits that are required to represent a pixel in a bitstream, that is, the number of bits that are required to represent $\hat{y}$ and $\theta$. The distortion $D$ and the rate $R$ are balanced by a scalar value denoted by $\lambda$. In a case where the up-sampling unit 435 is implemented by a neural network, the parameters of that network are also learned and coded into the bitstream to be used by the up-sampling unit when used in an inference mode.

Since the contribution of the INR network parameters $\theta$ to the rate $R$ is not as significant as that of the latent variables $\hat{y}$, only the latter can be considered when minimizing the coding cost, that is, $R(\hat{y}, \theta) \approx R(\hat{y})$. Furthermore, $R(\hat{y})$ can be replaced by the cross entropy. Thus, equation (1) can be replaced by:

$$\min_{\hat{y},\theta} Cost = \min_{\hat{y},\theta}(D\left(x, f_{\boldsymbol{\theta}}(\hat{z})\right) - \lambda \times \log_2 P\left(\hat{y}\right)), \qquad (2)$$

where $P(\hat{y})$ is the joint distribution of the latent variables $\hat{y}$. According to Equation (2), minimizing the cost involves minimizing the rate associated with the latent variables. This can be achieved by reducing the amount of information contained in the latent variables, at the price of a less accurate reconstruction, as less information in $\hat{y}$ is likely to increase the distortion $D$. Alternatively, minimizing the cost can be achieved by obtaining estimates of the distributions of the respective latent variables, as described herein.

In another example, the entropy coding of the set of latent variables may use a probability prediction (PP) network denoted $f_{\psi}$ defined by parameters $\psi$. The network PP network takes as input latent variables (e.g., located in a causal neighborhood of a current latent variable) and output parameters (e.g., mean and deviation in case of a Gaussian distribution) of distributions of respective latent variables. The probabilities output by the PP network are thus used for entropy coding (decoding respectively) the latent variables. In this latter case, the parameters $\psi$ may be learned during the training of $f_{\theta}$ and the latent variables. In this case, during training of the hybrid INR, the objective is thus to find the latent variables $\hat{y}$, the INR network parameters $\theta$ and the PP network parameters $\psi$ that minimize the coding cost, as follows:

$$\min_{\hat{y},\theta,\psi} Cost = \min_{\hat{y},\theta,\psi} \left( D\left(x, f_{\boldsymbol{\theta}}(\hat{z})\right) + \lambda \times R(\hat{y}, \theta, \psi)\right)$$

Equation (2) may thus be replaced by the following equation : $\min_{\hat{y},\theta,\psi} Cost = \min_{\hat{y},\theta,\psi}(D\left(x, f_{\boldsymbol{\theta}}(\hat{z})\right) - \lambda \times \log_2 P_{\psi}(\hat{y}))$.

The original image x can be a frame extracted from of a video sequence. When the frame has a YUV 4:4:4 format, for which there is the same number of samples for the three channels, the frame can be directly used for the training without any difficulties.

In existing approaches, the neural network (e.g., the neural network 440 on FIG. 4) outputs channels having a same number of samples (i.e., YUV 4:4:4), even in a case where the original frame is in another format, such as YUV 4:2:0, YUV 4:2:2. Consequently, the input YUV 4:2:0 frame is often transformed into a YUV 4:4:4 frame. A simple preprocessing, such as bicubic, is commonly used to upsample the U and V components to get the full resolution. However, this preprocessing stage does not consider that Y, and UV components are not necessarily well-aligned or phased. Therefore, this kind of approach may generate very high spatial frequency and make the inter component redundancy difficult to leverage. The training (e.g., that comprises computing the loss) is therefore non optimal since it is performed with channels having the full resolution but with potentially more high frequencies than necessary.

In another approach, the loss function used during the training may be computed on data in the encoding resolution (format), e.g., YUV 4:2:0. To this aim, the neural network's output (i.e., channels having a same number of samples, i.e., YUV 4:4:4) may be adapted (e.g., transformed) to an appropriate frame format, namely to the encoding format (a.k.a encoding format).

A method is thus disclosed wherein at least one downsampling neural network (e.g., a chroma downsampling neural network) is overfitted such that downsampling operations are best suited to the incoming signal to encode.

More particularly, a downsampling neural network (e.g., a lightweight neural network such as a shallow network) is defined to convert (e.g., transform) YUV 4:4:4 into another format with less U and V chroma samples than luma samples Y, e.g., YUV 4:2:0 or YUV 4:2:2. This network is used at the encoder side (e.g., to perform the training and the loss computation in the encoding format) and at the decoder side (e.g., to output the decoded frame with the YUV 4:2:0 format).

In another example, a set of (e.g., pre-trained) weights that fits a given phase (alignment between Y and UV components) is defined, e.g., to reduce the computational training time and the amount of transmitted information. The set of (e.g., pre-trained/pre-computed) weights used for a current picture may be signaled in the bitstream. The set of all (e.g., pre-trained/pre-computed) weights is assumed to be known at the decoder side.

In all the examples described below, the formats of the frame are YUV 4:4:4, YUV 4:2:0 or YUV 4:2:2. However, the present principles are not limited to these formats and may be applied to other formats, e.g., format with one luma channel and a plurality of chroma channels such as Lab color space. Besides, the present principles are not limited to three channels and may be applied to two, three or more than three channels.

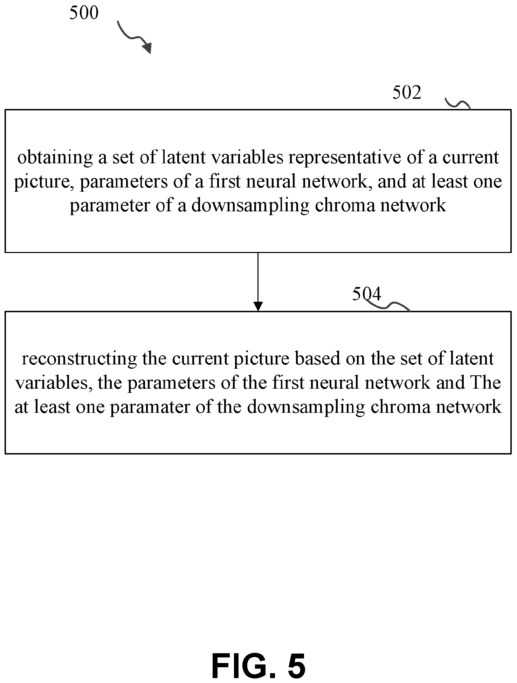

**FIG. 5** is a block diagram illustrating an example decoding method 500 according to one or more embodiments of the present disclosure.

A set of latent variables representative of a current picture is obtained (502). Parameters of a first neural network (or of a set comprising at least one first neural network) and at least one parameter of a downsampling chroma network are also obtained (502). For example, the set of set of latent variables, the parameters of the first neural network and the at least one parameter of the downsampling chroma network are decoded (e.g., entropy decoded) from a bitstream.

The current picture is reconstructed (504) based on the set of latent variables, the parameters of the first neural network and the at least one parameter of the downsampling chroma network.

In an embodiment, the first neural network is configured to output a picture with a plurality of channels having one and the same resolution (e.g., a picture in YUV 4:4:4 format) using the latent variables as inputs.

In an embodiment, the downsampling chroma network is configured to output a picture with a plurality of channels, each channel having a same resolution as a corresponding channel in the current picture (e.g., a current picture in YUV 4:2:2 format), using the output of the first neural network as input. Said otherwise, the downsampling chroma network is configured to output a picture at the encoding format (a.k.a. encoding frame format), wherein the encoding format may be signaled in the bitstream. Weights of the downsampling chroma network may be decoded from the bitstream or selected (e.g., loaded in the network) in a set of weights based on a first parameter representative of a chroma phasing and a second parameter representative of a color space.

In an embodiment, a type of clipping may be further obtained and the reconstructed current picture may (optionally) be clipped based on the type of clipping.

In another embodiment, the first neural network is replaced by a set of first neural networks, wherein the output of the set of first neural networks output a picture with a plurality of channels having one and the same resolution (e.g., a picture in YUV 4:4:4 format) using the latent variables as inputs

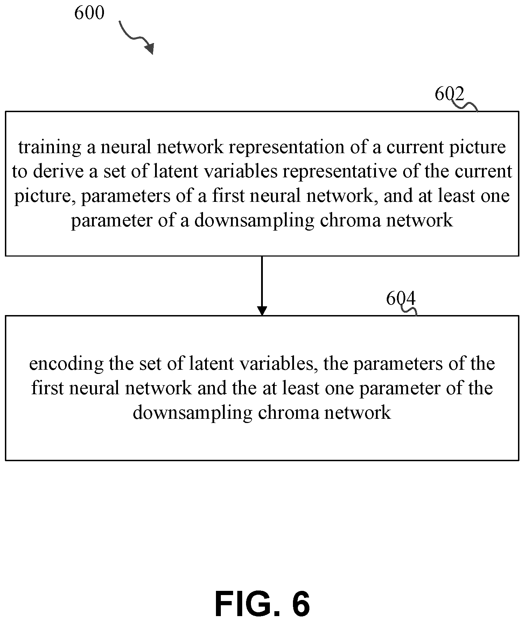

**FIG. 6** is a block diagram illustrating an example encoding method 600 according to one or more embodiments of the present disclosure.

A neural network representation of a current picture is trained (602) to derive a set of latent variables representative of the current picture, parameters of a first neural network (or of a set comprising at least one first neural network), and at least one parameter of a downsampling chroma network.

The set of latent variables, the parameters of the first neural network and the at least one parameter of the downsampling chroma network are encoded (604), e.g., entropy coded in a bitstream.

In an embodiment, the first neural network is configured to output a picture with a plurality of channels having one and the same resolution (e.g., a picture in YUV 4:4:4 format) using the latent variables as inputs.

In an embodiment, the downsampling chroma network is configured to output a picture with a plurality of channels, each channel having a same resolution as the corresponding channel in the current picture (e.g., a current picture in YUV 4:2:2 format), using the output of the first neural network as input. Said otherwise, the downsampling chroma network is configured to output a picture at the encoding format (a.k.a. encoding frame format), wherein the encoding format may be signaled in the bitstream. Weights of the downsampling chroma network may be encoded in the bitstream or selected (e.g., loaded in the network) in a set of weights based on a first parameter representative of a chroma phasing and a second parameter representative of a color space, in which case the first and second parameters are encoded in the bitstream.

In an embodiment, the reconstructed current picture may (optionally) be clipped based on a type of clipping and the type of clipping may be further encoded.

In another embodiment, the first neural network is replaced by a set of first neural networks, wherein the output of the set of first neural networks output a picture with a plurality of channels having one and the same resolution (e.g., a picture in YUV 4:4:4 format) using the latent variables as inputs. This is applicable to all embodiments described below.

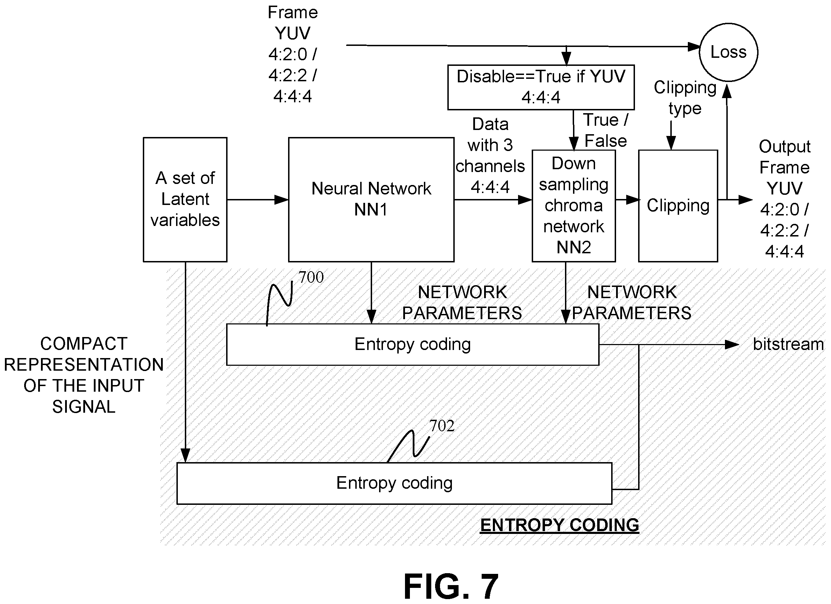

**FIG. 7** is a block diagram illustrating an example encoding method according to one or more embodiments of the present disclosure. The encoding method comprises training the neural networks and encoding the given input frame.

Let F be a frame (e.g., an image frame or a picture) to be encoded. The frame format F may be YUV 4:4:4, YUV 4:2:2, YUV 4:2:0 and is called the encoding format. The encoding format may be (e.g., should be) signaled (i.e., encoded) in the bitstream.

A set of latent variables are used to represent in a compact manner the signal to encode. A typical example of such approach is presented in Ladune. The latent variables are then used as input as a first neural network NN1.

In the method of FIG. 7, two neural networks NN1 and NN2 are jointly trained (from left to right in FIG. 7) in addition to the set of latent variables (and possibly the PP network $f_\psi$ if such network is used): The main network NN1 ($f_\theta$) is parametrized by the parameters $\theta$. In input, this network NN1 takes the set of latent variables, whereas the output of this network is a frame of (e.g., three) channels having one and the same resolution, e.g., YUV 4:4:4 frame. The second network NN2 (a.k.a. down sampling chroma network) is a neural network that makes it possible to downsample the chroma components (e.g., U and V) to recover the encoding format of the chroma components, i.e., a frame with chroma components having the same resolution as the chroma components of the frame F. This network NN2 ($f_{\theta_d}$) is parametrized by $\theta_d$. The downsampling network NN2 may be bypassed if/when the encoding frame format is YUV 4:4:4.

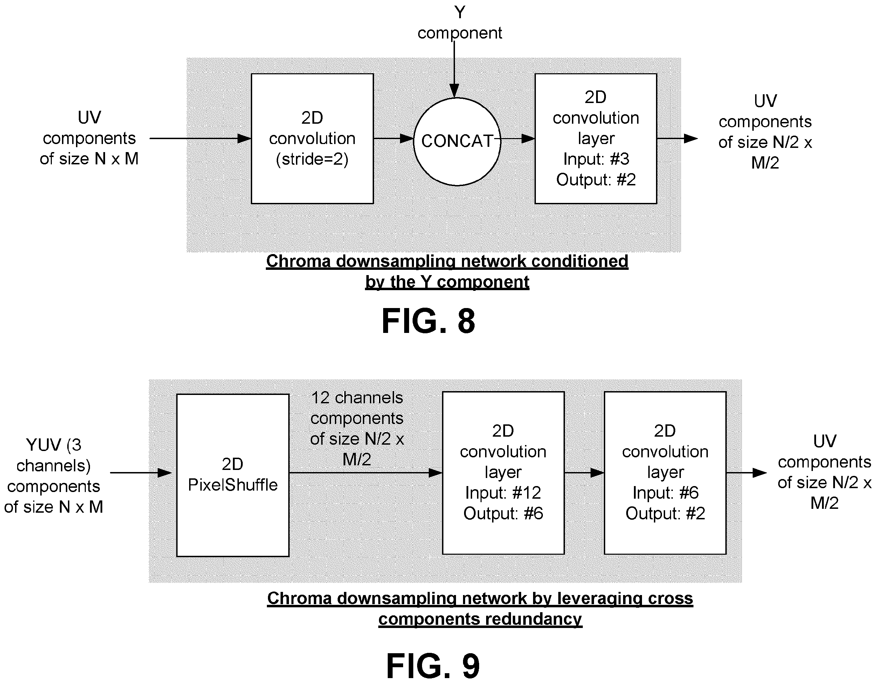

The second network NN2 may be a lightweight network. Two different architectures are illustrated by FIGs 8 and 9. **FIG. 8** is a block diagram illustrating an example neural network for chroma downsampling conditioned by the Y component. The input network is the UV components at full resolution and the output network is the UV components at half resolution. The network comprises a 2D convolution layer (e.g., with stride equal to 2) followed by a concatenation and another 2D convolution layer. **FIG. 9** is a block diagram illustrating an example neural network for chroma downsampling that leverages the cross components redundancy. For that purpose, the YUV components are the input of the network. A 2DPixelShuffle operation is then used to rearrange channels and their resolutions in an appropriate format, such as:

$$(C, N, M) \rightarrow (4 * C, N/2, M/2)$$

Where C represents the number of channels (C=3 in our context).

The 2DPixelShuffle operation is followed by a set of convolution layers to reduce progressively the number of channels to 3. These propositions illustrated by FIG. 8 and 9 are just examples and some others model architectures may be used, with different numbers and types of layers. A 2D convolution layer is assumed to be a convolution operation associated with bias and followed by an activation function (e.g. ReLU).

The neural networks NN1 and NN2 are first trained. To this aim, a loss function is used to optimize the parameters $\{\theta, \theta_d\}$ and the latent variables. The loss function may be a classical loss function defined as follows:

$$\min_{\hat{y},\theta,\theta_d} Cost = \min_{\hat{y},\theta,,\theta_d} \left( D\left(x, f_{\theta_d}(f_{\boldsymbol{\theta}}(\hat{z}))\right) + \lambda R(\hat{y}, \theta, \theta_d) \right)$$

Where $\hat{y}$ denotes the quantized latent variables and $\hat{z}$ denotes their up-sampled version, D is a distortion which quantifies the difference between the reconstructed image $\hat{\boldsymbol{x}} = f_{\theta_d}(f_{\theta}(\hat{z}))$ and the original image x. The reconstructed image is obtained by applying sequentially the two neural networks, i.e. $f_{\theta}$ and $f_{\theta_d}$. R is the bitrate of the encoded parameters and $\lambda$ a trade-off parameter between D and R. D could be any differentiable distortion measure, such as mean squared error.

In a variant, the loss function is used to optimize the parameters $\{\theta, \theta_d, \psi\}$ and the latent variables in a case where the entropy coding (700, 702) is performed by an entropy network.

For a YUV 4:2:0 frame, the distortion D may be given by:

$$\mathrm{D}(x, \hat{x}) = \lambda_1 \times D^Y(x^Y, \hat{x}^Y) + \lambda_2 \times D^U(x^U, \hat{x}^U)) + \lambda_3 \times D^V(x^V, \hat{x}^V)$$

Where $x^Y, x^U, x^V$ represent the Y, U, V components of the input signal. $\hat{\boldsymbol{x}}^Y, \hat{\boldsymbol{x}}^U, \hat{\boldsymbol{x}}^V$ represent the Y, U, V components of the network's output. $\lambda_1$, $\lambda_3$ and $\lambda_2$ are weighting coefficients to balance the importance of luma and chroma components. When the distortion is the mean squared error, the following values may be used for a frame format YUV 4:2:0 $\lambda_1 = \frac{4}{6}$, $\lambda_2 = \lambda_3 = 1/6$. Another set of parameters is : $\lambda_1 = \frac{10}{12}$, $\lambda_2 = \lambda_3 = 1/12$ which balance the PSNR luma chroma more fairly.

Before the computation of the loss, the results may (optionally) be clipped to define the range of the values. Below, different types of clipping may be used. These are examples and the present principles are not limited to these examples:

- clipping_type = limited, the clipping bounds are 64-940 for luma and 64-960 for chroma for a 10 bits signal;
- clipping_type = full, the range is 0-1023 for all components;
- clipping_type = full8, the range is 0-1020 for all components;
- clipping type = custom. The boundaries are signaled in the bitstream.

Once trained, the parameters of NN1 and NN2 are encoded (e.g., entropy coded). The encoding of a frame (e.g., a YUV frame in format YUV 4:4:4, YUV 4:2:2, YUV 4:2:0) in a bitstream is thus performed as follows. The parameters $\theta$ of the neural network NN1 are encoded (700). The PP network parameters $\psi$ may be further encoded (entropy coded) if such a network is used. The compact representation (i.e., the latent variables) of the signal is encoded (702). In the case where a PP network is used, the latent variables are encoded (entropy coded) in the bitstream based on the distribution parameters output by the PP network.

The encoding format of the input frame may be signaled in the bitstream as well as the clipping type (i.e., they are both encoded (700) in the bitstream).

In the first example illustrated on FIG. 7, the parameters $\theta_d$ of the neural network NN2 are also encoded (700), e.g., if the encoding format of the input frame is not YUV 4:4:4.

Entropy coding is used to encode and transmits the set of trainable weights $\{\theta, \theta_d\}$ and possibly $\{\psi\}$. They can be classically encoded with arithmetic coder or with the neural compression codec such as Neural Network Coding (NNC)/ISO/IEC 15938-17 or MPEG-7 part 17. The entropy coding is also used to encode a compact representation of the input signal. As in Ladune, such representation can be a set of latent variables.

In the first example of FIG. 7, the weights $\{\theta_d\}$ of the downsampling chroma network are entropy coded. In a second example, instead of training and encoding the weights, the weights $\{\theta_d\}$ may be loaded (e.g., selected) from a set of (e.g., predefined) weights. This set may have been obtained from off-line training for known values of UV phasing values in a given color space (e.g., gamut). The set may further comprise custom weights in the case we would like to have a fast training mode. These custom weights may be set without any training in which case they are signaled in the bitstream. The weights $\{\theta_d\}$ selected from the set of (e.g., predefined) weights may be signaled by two syntax elements, e.g., weights_downsampling_chroma and type_color_space.

Table 1 presents the appropriate syntax for the weights_downsampling_chroma value. This value may be coded over 8 bits and may refer to a specific chroma phasing (values 1 to 5 in Table 1). In an example, if/when the value is equal to 6 (UNSPECIFIED), the weights are inferred from the training and thus signaled in the bitstream.

**Table 1: description of weights_downsampling_chroma**

| weights_downsampling_chroma | Description |
|---|---|
| 0 | Custom/generic weights |
| 1 | LEFT |
| 2 | CENTER |
| 2 | TOP_LEFT |
| 3 | TOP |
| 4 | BOTTOM_LEFT |
| 5 | BOTTOM |
| 6 | UNSPECIFIED |
| 7 | RESERVED FOR FUTURE USE |

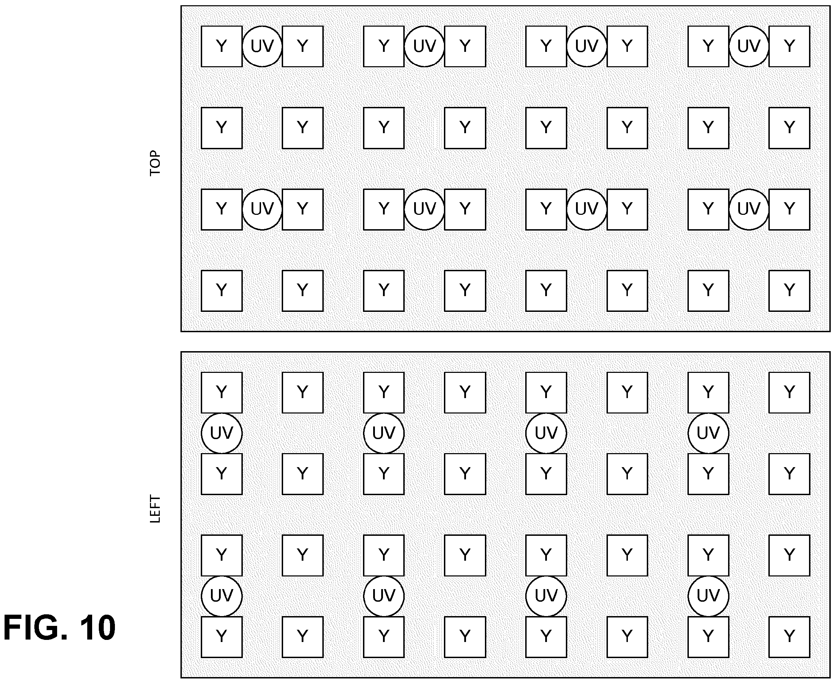

Two examples of chroma phasing are illustrated in **FIG. 10.** Top of FIG. 10 illustrates a top chroma phasing and bottom of FIG. 10 illustrates a left chroma phasing.

Table 2 presents the gamut for which the transform is performed.

**Table 2: description of type_color space transformation**

| Type_color_space_transformation | Coefficient |
|---|---|
| 0 | RGB |
| 1 | BT709 |
| 2 | BT601_625 |
| 3 | BT601_525 |
| 4 | SMPTE240 |
| 5 | YCGCO |
| 6 | BT2020_NON_CONSTANT_LUMINANCE |
| 7 | BT2020_CONSTANT_LUMINANCE |
| 8 | RESERVED FOR FUTURE USE |

In this second example, weights_downsampling_chroma and type_color space transformation parameters may be signaled (i.e., encoded) in the bitstream to indicate a specific set of weights. In yet another example, the first and second examples are combined.

The weights_downsampling_chroma and type_color_space transformation parameters may be signaled (i.e., encoded) if required (700), e.g., if the encoding format is not YUV 4:4:4. If the two aforementioned parameters are not signaled (not encoded) and if the encoding format of the input frame is not YUV 4:4:4, the parameters of the neural network $f_{\theta_d}$ are encoded. In another example, if the two aforementioned parameters are signaled and the value of weights_downsampling_chroma indicates UNSPECIFIED or Custom/generic weights, the parameters of the neural network $f_{\theta_d}$ are encoded.

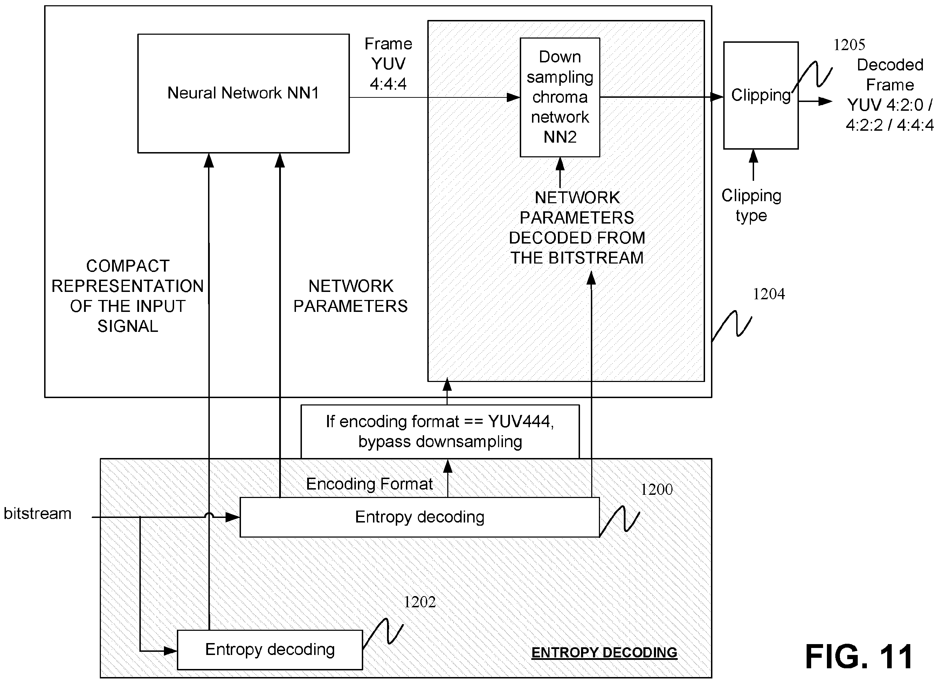

**FIG. 11** is a block diagram illustrating an example decoding method according to one or more embodiments of the present disclosure. The decoding is performed from a bitstream, e.g., provided by the encoding method of FIG. 7.

The parameters $f_\theta$ of the neural network *NN*1 are obtained (1200), e.g., decoded (entropy decoded) from the bitstream. The compact representation of the signal (i.e., the latent variables) is also obtained, e.g., decoded (entropy decoded) from the bitstream (1202). In a variant, the PP network parameters $\psi$ may further be obtained (e.g., entropy decoded) if such a network is used. In the latter case, based on the distribution parameters output by the PP network, the latent variables are decoded (entropy decoded) from the bitstream.

If/when the encoding frame format signaled in the bitstream is YUV 4:4:4, the decoded frame YUV 4:4:4 is reconstructed by using the neural network $f_\theta$ and the chroma downsampling operation is bypassed.

If/when the encoding frame format signaled in the bitstream is not YUV 4:4:4. The following applies. The parameters $f_{\theta_d}$ of the neural network NN2 (i.e., the downscaling chroma network) are obtained, e.g., decoded (1200) from the bitstream. The frame YUV 4:4:4 is reconstructed (1204) from the decoded latent variables by using the neural network NN1 ($f_\theta$) parameterized by $\{\theta\}$ and the chroma is finally downsampled by the network NN2 ($f_{\theta_d}$) parameterized by $\{\theta_d\}$. The samples of the reconstructed frame (e.g., YUV) may (optionally) be clipped (1205) based on a clipping type. The type of clipping (e.g., used during the encoding) may be decoded from the bitstream (1200).

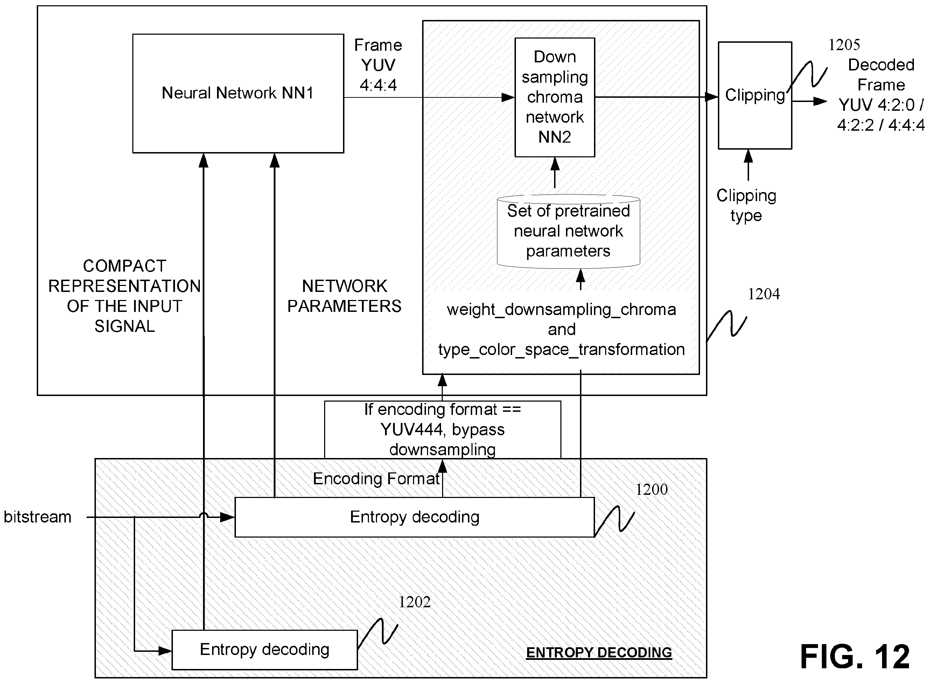

**FIG. 12** is a block diagram illustrating an example decoding method according to one or more embodiments of the present disclosure. The decoding is performed from a bitstream, e.g., provided by the encoding method of FIG. 7.

The parameters $f_\theta$ of the neural network *NN*1 are obtained (1200), e.g., decoded (entropy decoded) from the bitstream. The compact representation of the signal (i.e., the latent variables) is also obtained, e.g., decoded (entropy decoded) from the bitstream (1202). In a variant, the PP network parameters $\psi$ may further be obtained (e.g., entropy decoded) if such a network is used. In the latter case, based on the distribution parameters output by the PP network, the latent variables are decoded (entropy decoded) from the bitstream.

If/when the encoding (frame) format signaled in the bitstream is YUV 4:4:4, the decoded frame YUV 4:4:4 is reconstructed by using the neural network $f_\theta$ and the chroma downsampling operation is bypassed.

If/when the encoding frame format signaled in the bitstream is not YUV 4:4:4. The following applies. The weights_downsampling_chroma and type_color space transformation parameters are signaled (i.e., are decoded from the bitstream at 1200), then the appropriate weights $\{\theta_d\}$ are uploaded in the neural network NN2. For example, the appropriate weights $\{\theta_d\}$ may be derived from a Look-Up Table (LUT) associating weights with weights_downsampling_chroma and type_color_space transformation parameter values. The LUT may be known by both the encoder and decoder. The frame YUV 4:4:4 is reconstructed (1204) from the decoded latent variables by using the neural network NN1 parameterized $\{\theta\}$ and the chroma is finally downsampled by the network NN2 parameterized by $\{\theta_d\}$. The samples of the reconstructed frame (e.g., YUV) may (optionally) be clipped (1205) based on a clipping type. The type of clipping (e.g., used during the encoding) may be decoded from the bitstream (1200).

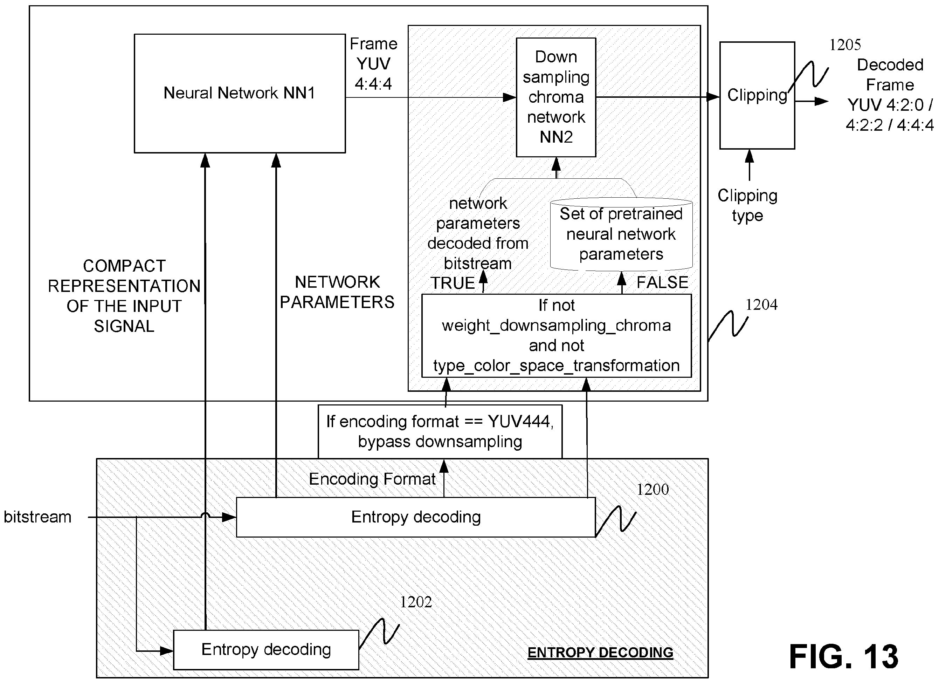

**FIG. 13** is a block diagram illustrating an example decoding method according to one or more embodiments of the present disclosure. The decoding is performed from a bitstream, e.g., provided by the encoding method of FIG. 7.

The parameters $f_\theta$ of the neural network *NN*1 are obtained (1200), e.g., decoded (entropy decoded) from the bitstream. The compact representation of the signal (i.e., the latent variables) is also obtained, e.g., decoded (entropy decoded) from the bitstream (1202). In a variant, the PP network parameters $\psi$ may further be obtained (e.g., entropy decoded) if such a network is used. In the latter case, based on the distribution parameters output by the PP network, the latent variables are decoded (entropy decoded) from the bitstream.

If/when the encoding (frame) format signaled in the bitstream is YUV 4:4:4, the decoded frame YUV 4:4:4 is reconstructed by using the neural network $f_\theta$ and the chroma downsampling operation is bypassed.

If/when the encoding frame format signaled in the bitstream is not YUV 4:4:4. The following applies. If/when the weights_downsampling_chroma and type_color_space transformation parameters are signaled (i.e., are decoded from the bitstream at 1200), then the appropriate weights $\{\theta_d\}$ are uploaded in the neural network NN2, otherwise (i.e., the parameters weights_downsampling_chroma and type_color_space are not signalled) the parameters $\{\theta_d\}$ of the neural network NN2 (i.e., the downscaling chroma network) are decoded (1200) from the bitstream.

The frame YUV 4:4:4 is reconstructed (1204) from the decoded latent variables by using the neural network NN1 parameterized $\{\theta\}$ and the chroma is finally downsampled by the network NN2 parameterized by $\{\theta_d\}$. The samples of the reconstructed frame may (optionally) be clipped (1205) based on a clipping type. The type of clipping (e.g., used during the encoding) may be decoded from the bitstream (1200).

The methods described above may be applied to each frame of a video to encode (respectively reconstruct) the whole video.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "frame", "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method comprising:

   obtaining a set of latent variables representative of a current picture, parameters of a set of at least one first neural network, and at least one parameter of a downsampling chroma network; and
   reconstructing the current picture based on the set of latent variables, the parameters of the set of at least one first neural network and the at least one parameter of the downsampling chroma network.

2. The method of claim 1, wherein the set of at least one first neural network is configured to output a picture with a plurality of channels having one and the same resolution using the set of latent variables as inputs.

3. The method of claim 1 or 2, wherein the downsampling chroma network is configured to output a picture with a plurality of channels, each channel having a same resolution as a corresponding channel in the current picture, using an output of the set of at least one first neural network as input.

4. The method of any one of claims 1 to 3, further comprising obtaining a type of clipping and clipping the reconstructed current picture based on the type of clipping.

5. The method of any one of claims 1 to 4, wherein obtaining at least one parameter of a downsampling chroma network comprises decoding weights of the downsampling chroma network.

6. The method of any one of claims 1 to 4, wherein obtaining at least one parameter of a downsampling chroma network comprises decoding a first parameter representative of a chroma phasing and a second parameter representative of a color space and selecting weights of the downsampling chroma network in a set of weights based on the first and second parameters.

7. A method comprising:

training a neural network representation of a current picture to derive a set of latent variables representative of the current picture, parameters of a set of at least one first neural network, and at least one parameter of a downsampling chroma network; and
encoding the set of latent variables, the parameters of the set of at least one first neural network and at least one parameter of the downsampling chroma network.

8. The method of claim 7, wherein the set of at least one first neural network is configured to output a picture with a plurality of channels having one and the same resolution using the set of latent variables as inputs.

9. The method of claim 7 or 8, wherein the downsampling chroma network is configured to output a picture with a plurality of channels, each channel having a same resolution as a corresponding channel in the current picture, using an output of the set of at least one first neural network as input.

10. The method of any one of claims 7 to 9, further comprising clipping the output of the downsampling chroma network based on a type of clipping and encoding the type of clipping.

11. The method of any one of claims 1 to 4, wherein encoding at least one parameter of a downsampling chroma network comprises encoding weights of the downsampling chroma network.

12. The method of any one of claims 1 to 4, wherein weights of the downsampling chroma network being selected in a set of weights based on a first parameter representative of a chroma phasing and a second parameter representative of a color space, encoding at least one parameter of the downsampling chroma network comprises encoding the first and second parameters.

13. A decoding apparatus comprising one or more processors and at least one memory coupled to said one or more processors, wherein said one or more processors are configured to perform:

obtaining a set of latent variables representative of a current picture, parameters of a set of at least one first neural network, and at least one parameter of a downsampling chroma network; and
reconstructing the current picture based on the set of latent variables, the parameters of the set of at least one first neural network and at least one parameter of the downsampling chroma network.

14. A encoding apparatus comprising one or more processors and at least one memory coupled to said one or more processors, wherein said one or more processors are configured to perform:

training a neural network representation of a current picture to derive a set of latent variables representative of the current picture, parameters of a set of at least one first neural network, and at least one parameter of a downsampling chroma network; and
encoding the set of latent variables, the parameters of the set of at least one first neural network and at least one parameter of the downsampling chroma network.

15. A computer program comprising program code instructions for implementing the method according to any one of

**EP 4 765 806 A1**

claims 1-12 when executed by a processor.

**16.** A computer readable storage medium having stored thereon instructions for implementing the method of any one of claims 1-12.

**17.** A signal comprising a bitstream, formed by performing the method of any one of claims 7-12.

**FIG. 1**

EP 4 765 806 A1

**FIG. 2**

300

310

Input signal

| Learn INR parameters | 320 |

| Encode INR parameters | 330 |

350

bitstream

# FIG. 3

**FIG. 4**

EP 4 765 806 A1

500

502

obtaining a set of latent variables representative of a current picture, parameters of a first neural network, and at least one parameter of a downsampling chroma network

504

reconstructing the current picture based on the set of latent variables, the parameters of the first neural network and The at least one paramater of the downsampling chroma network

# FIG. 5

602

training a neural network representation of a current picture to derive a set of latent variables representative of the current picture, parameters of a first neural network, and at least one parameter of a downsampling chroma network

604

encoding the set of latent variables, the parameters of the first neural network and the at least one parameter of the downsampling chroma network

**FIG. 6**

FIG. 7

Y
component

UV
components
of size N x M
→
┌──────────────┐
│      2D      │
│  convolution │
│  (stride=2)  │
└──────────────┘
→ CONCAT →
┌──────────────┐
│      2D      │
│  convolution │
│     layer    │
│  Input: #3   │
│  Output: #2  │
└──────────────┘
→
UV
components
of size N/2 x
M/2

**Chroma downsampling network conditioned
by the Y component**

# FIG. 8

EP 4 765 806 A1

YUV (3
channels)
components
of size N x M
→
┌──────────────┐
│      2D      │
│ PixelShuffle │
└──────────────┘
→
12 channels
components
of size N/2 x
M/2
→
┌──────────────┐
│      2D      │
│  convolution │
│     layer    │
│  Input: #12  │
│  Output: #6  │
└──────────────┘
→
┌──────────────┐
│      2D      │
│  convolution │
│     layer    │
│  Input: #6   │
│  Output: #2  │
└──────────────┘
→
UV
components
of size N/2 x
M/2

**Chroma downsampling network by leveraging cross
components redundancy**

# FIG. 9

FIG. 10

FIG. 11

FIG. 12

1205

Decoded Frame YUV 4:2:0 / 4:2:2 / 4:4:4

Clipping

Clipping type

1204

Set of pretrained neural network parameters

FALSE

Down sampling chroma network NN2

network parameters decoded from bitstream TRUE

If not weight_downsampling_chroma and not type_color_space_transformation

Frame YUV 4:4:4

Neural Network NN1

NETWORK PARAMETERS

If encoding format == YUV444, bypass downsampling

Encoding Format

Entropy decoding

1200

ENTROPY DECODING

1202

Entropy decoding

COMPACT REPRESENTATION OF THE INPUT SIGNAL

bitstream

**FIG. 13**

**EP 4 765 806 A1**

Europäisches Patentamt
European Patent Office
Office européen des brevets

# EUROPEAN SEARCH REPORT

Application Number

EP 24 30 7136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/336736 A1 (GAO HAN [CN] ET AL) 19 October 2023 (2023-10-19) * paragraphs [0115] - [0118], [0148], [0155], [0156], [0176] - [0179], [0189], [0241], [0290], [0339]; figures 4, 9-12 * | 1-17 | INV.<br>H04N19/117<br>H04N19/172<br>H04N19/186<br>H04N19/59<br>H04N19/85 |
| | ----- | | |
| A | WO 2024/039680 A1 (BYTEDANCE INC [US]) 22 February 2024 (2024-02-22) * paragraphs [0093] - [0096], [101152] * | 1-17 | |
| | ----- | | |
| A | WO 2024/184044 A1 (INTERDIGITAL CE PATENT HOLDINGS SAS [FR]) 12 September 2024 (2024-09-12) * paragraphs [0036] - [0038] * | 1-17 | |
| | ----- | | |
| A | CHENG XINYUAN ET AL: "HNRC: Lightweight Image Compression with Hybrid Neural Representation", 5 December 2024 (2024-12-05), PATTERN RECOGNITION; [LECTURE NOTES IN COMPUTER SCIENCE; LECT.NOTES COMPUTER], SPRINGER NATURE SWITZERLAND, CHAM, PAGE(S) 404 - 418, XP047716326, ISSN: 0302-9743 ISBN: 978-3-031-78118-6 [retrieved on 2024-12-05] * section 1; figure 1 * | 1-17 | |
| | ----- | | **TECHNICAL FIELDS SEARCHED (IPC)**<br><br>H04N |

The present search report has been drawn up for all claims

| Place of search | Date of completion of the search | Examiner |
|---|---|---|
| Munich | 8 May 2025 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 7136

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2025

| Patent document cited in search report | Publication date | Patent family member(s) | | Publication date |
|---|---|---|---|---|
| US 2023336736 A1 | 19-10-2023 | CN | 116508320 A | 28-07-2023 |
| | | EP | 4193595 A1 | 14-06-2023 |
| | | TW | 202228439 A | 16-07-2022 |
| | | US | 2023336736 A1 | 19-10-2023 |
| | | WO | 2022106014 A1 | 27-05-2022 |
| WO 2024039680 A1 | 22-02-2024 | CN | 119732049 A | 28-03-2025 |
| | | WO | 2024039680 A1 | 22-02-2024 |
| WO 2024184044 A1 | 12-09-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LADUNE T,** ; **PHILIPPE P** ; **HENRY F et al.** Cool-chic: Coordinate-based low complexity hierarchical image codec. *Proceedings of the International Conference on Computer Vision (ICCV)*, 2023